# EUROPEAN PATENT APPLICATION

(11) **EP 0 705 647 A1**
(43) Date of publication of application: **10.04.1996**
(21) Application number: 95114146.4
(22) Date of filing: 08.09.1995
(51) Int. Cl.: B05C 5/02, B05C 9/06, G11B 5/848

(54) **Extrusion coating apparatus**

(30) Priority: 06.10.1994 JP 243048/94
(71) Applicant: FUJI PHOTO FILM CO., LTD., Kanagawa (JP)
(72) Inventor: Tomaru, Mikio, c/o Fuji Photo Film Co., Ltd., Kanagawa (JP); Suzuki, Akihiro, c/o Fuji Photo Film Co., Ltd., Kanagawa (JP); Shibata, Norio, c/o Fuji Photo Film Co., Ltd., Kanagawa (JP)
(74) Representative: Grünecker, Kinkeldey, Stockmair & Schwanhäusser Anwaltssozietät

(57) **Abstract**

A coating apparatus in which variations in the thickness of coating films in the width direction or the production of stripes caused by the nonuniformity of a support in the width direction are prevented so that products coated with thin films uniform in coating thickness can be manufactured stably at a high speed. In the coating apparatus, a precoat composition is applied in advance onto a coating surface of a support, and in a liquid-sealed condition in which entrained air is eliminated between the precoat composition and a front edge (21) on the upstream side in the moving direction of the support, at least two layers of coating compositions are discharged from between the front edge (21) and a back edge (24) having a top end (60) set back from the front edge (21) in the direction against the support. The coating apparatus is configured so that a relationship *a* > *b* is established between a slot outlet width *a*, the distance between an edge surface rear end (31) of the front edge (21) and a top end (60) of the back edge (24), and a distance *b* in the direction of a slot depth from a straight line X expressing the first-mentioned distance to a top end of the deepest intermediate block (22) disposed between the two edges.

## Description

### BACKGROUND OF THE INVENTION

The present invention relates to an extrusion-type coating apparatus for extruding a coating composition onto a surface of a continuously moving web-like support, and for coating the surface of the support with a plurality of thin layers of coating compositions with a uniform thickness at a high speed.

U.S. Patent Nos. 4,854,262 and 5,030,484 disclose coating apparatuses for simultaneously applying a plurality of coating compositions onto a flexible support moving at a high speed so as to form plural coating layers. These apparatuses employ an extrusion coating head of the support pressing type which is provided with a doctor edge for pressing a coating composition onto the downstream side in the moving direction of the support with respect to a coating composition discharge slot in a top end area of the coating head so as to press the support toward the doctor edge to thereby apply the coating composition with the coating composition pressed between the edge and the support.

Although this support pressing type coating head is superior in forming a thin layer at high speed, because this method relies upon a balance between the support pushing pressure and the coating composition pressure, there is a problem that coating unevenness appears if there is a nonuniformity in a rigidity such as Young's modulus or the like of the support.

The coating compositions mentioned here include, for example, a photosensitive coating composition, a magnetic coating composition, a surface protective, antistatic or lubricant coating composition, etc. As for typical products formed from those coating compositions, there are various kinds of photographic films, photographic printing papers, magnetic recording media such as magnetic disks or magnetic tapes, etc.

Under such circumferences, the present inventor has proposed a non-pressing type coating apparatus in which the coating unevenness is improved so as to avoid variations in thickness of the coated films due to stripe faults, nonuniformity in thickness, Young's modulus of elasticity, etc., of a support, the present inventor proposed a coating apparatus. Examples of such an apparatus are disclosed in U.S. Patent No. 4,907,530, European Patent Unexamined Publication No. 0 566 124A, etc. As shown in Fig. 6, in such an apparatus a support entrance side is liquid-sealed by a precoat composition 6 such as an organic solvent or the like applied in advance onto the coating surface of a support 1, and a coating composition 7 supplied from a liquid reservoir 9 is extruded through a slot 5 by an extrusion head having a front edge 2 disposed on the upstream side in the moving direction of the support (direction A), and a back edge 3 disposed on the downstream side in the moving direction of the support the top end of which is set back by a level difference *t* from the front edge in the direction against the support.

With this apparatus, the precoat composition, which has an organic solvent as a main constituent, is first applied onto the coating surface of a support using a conventional coating apparatus such as an engraved-roll coater, a roll coater, a blade coater, an extrusion coater, or the like. The solvent layer prevents entrained air from the upstream side of the front edge from penetrating into coating layers, thereby realizing high-speed coating while maintaining a good coating state.

That is, since a back edge 3 is designed so as to be set back from a front edge 2 with respect to a support 1, no pressing force is applied to the back edge 3 by the support 1, as a result of which foreign matter is prevented from being trapped on the top end of the back edge 3. Further, even if the behavior of the support becomes unstable near the coating head because of variations in the elastic coefficient of the support, etc., because this coating method does not rely on any pressing force acting on the support, stable coating can nevertheless be maintained. Accordingly, it is possible to prevent unevenness in the thickness of the coated layers, resulting in excellent coated products.

However, still sometimes stripes occur in a boundary portion between coating layers when multi-layer simultaneous coating is performed using such a non-pressing type coating apparatus. These stripes disrupt the whole of the coating layers, and can cause stripe faults on the surface of the coating layers. For example, if the coated layers are magnetic recording layers, this type of fault reduces electromagnetic characteristics of the magnetic recording layers. After investigating the reasons for this problem, it was found that the edge top end portion of an intermediate block of the coating head in the coating apparatus had coating composition adhering thereto in the position corresponding to that of the striped disorder.

Thus, when this coating system is used, it is necessary that the top end portion of the coating head be wiped off with a cloth or soft elastic member moistened with a solvent for removing adhering coating material from the edge when coating is started or when a joint portion of the web-like supports passes the coating head. However, it can be considered that the edge cannot easily be cleaned perfectly because the above-mentioned intermediate block is disposed on the inner side of the discharge slot for the coating composition, so that some adhering material remains.

This problem can be solved if the edge of the intermediate block is wiped off carefully using a special jig specially manufactured to clean the intermediate block. This does not only make the system cost high, but the cleaning work is troublesome. In addition, to spend time wiping off and cleaning the edge reduces productivity. Further, if the coating composition dries and solidifies during cleaning, stripes can again be caused.

### SUMMARY OF THE INVENTION

It is an object of the present invention to provide a coating apparatus in which it is possible to avoid imperfect wiping of an edge of an intermediate block and with which it is possible to perform work rapidly.

The foregoing object of the present invention is attained by a coating apparatus in which a precoat composition is applied in advance onto a coating surface of a support, and in a liquid-sealed condition in which entrained air is eliminated between the precoat composition and a front edge on the upstream side in the moving direction of the support, at least two layers of coating compositions are discharged from between the front edge and a back edge located on the downstream side in the moving direction of the support and which has a top end set back from the front edge in the direction against the support, the coating apparatus being characterized in that a relationship *a* > *b* is established between a slot outlet width *a* determined by a distance between an edge surface rear end of the front edge and a top end of the back edge, and a distance *b* in the direction of a slot depth from a straight line X expressing the first-mentioned distance to a top end of the deepest intermediate block disposed between the two edges.

### BRIEF DESCRIPTION OF THE DRAWINGS

Fig. 1 is a schematic diagram illustrating the positional relationship between a support and a head top end portion in an embodiment of a coating apparatus according to the present invention;
Fig. 2 is a schematic diagram illustrating an apparatus operating after application of a precoat composition;
Fig. 3 is schematic diagram of the shape of the coating apparatus shown in Fig. 1;
Fig. 4 is a schematic diagram of the shape of a coating apparatus of another embodiment of the present invention;
Fig. 5 is a graph showing the relationship between shear rate and viscosity when magnetic coating composition was used; and
Fig. 6 is a schematic diagram illustrating a non-pressing type coating apparatus.

### DESCRIPTION OF THE PREFERRED EMBODIMENTS

A coating apparatus for magnetic recording media constructed in accordance with a preferred embodiment of the present invention will be described below with reference to the accompanying drawings.

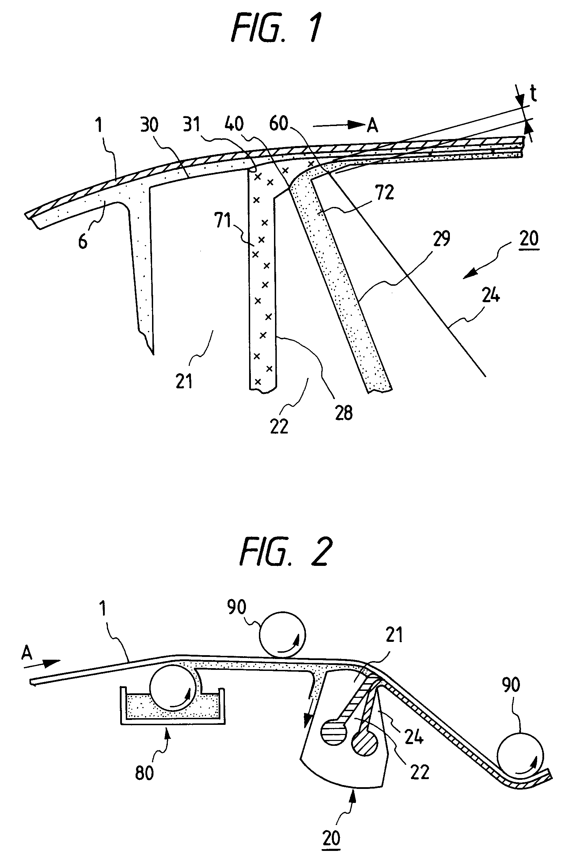

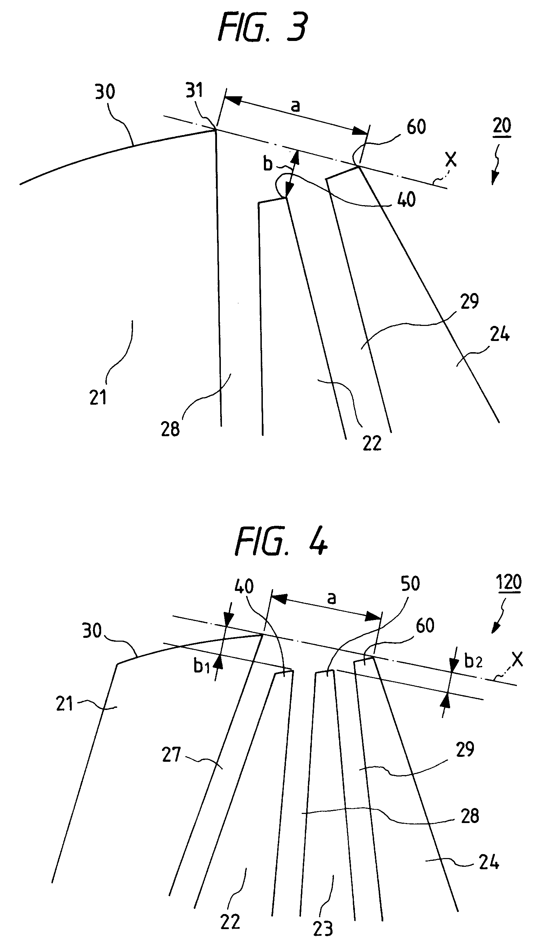

Figs. 1 to 3 show the shape of a coating head, the positional relationship with a support, and a main portion of a coating process. Figs. 1 and 3 are schematic side views of a head top end portion, and Fig. 2 is a schematic view illustrating an apparatus operating after application of a precoat composition.

As shown in Figs. 1 and 2, in a coating apparatus 20 of this embodiment, a front edge 21 is disposed on the upstream side of a back edge 24 in the moving direction of a support (direction A), and is designed to project toward the support by a level difference *t* in comparison with the top end portion of the back edge 24. An intermediate block 22 is provided between the front edge 21 and the back edge 24 to thereby form a slot 28 for discharging a first coating composition 71 (lower layer coating composition) and a slot 29 for discharging a second coating composition 72 (upper layer coating composition).

With this construction, the coating compositions discharged from the slots 28 and 29 are separated by a top end portion 60 of the back edge 24, and are not smoothed downstream therefrom.

Although the slots 28 and 29 communicate with respective pocket portions (not shown) forming reservoirs, the shapes of these slots 28 and 29 may be such that their width (the width in the thickness direction of the coating composition) decreases gradually from the pocket portions toward the support 1, or they may be parallel to one another.

Further, the front edge 2 is formed so that the whole area of its edge surface opposite to the support 1 expands toward the support. Although a curved surface with a radius of curvature of about 0.5 to 20 mm may be used as the shape of the front edge 2 expanding toward the support, the shape is not particularly limited to such a curved surface if entrained air can be effectively prevented from being involved. The upstream-side edge of the front edge 21 for scraping the precoat composition 6 is made sharp so as to scrape the precoat composition satisfactorily.

Although the shapes of a top end 40 of the intermediate block 22 and the top end 60 of the back edge 24 are not defined specially, each of the shapes has a sharp edge at the most downstream end of an edge surface, which is the point where the coating composition parts away therefrom.

The positional relationship between the edge top ends are established as follows. As is shown in Fig. 3, a straight line X connects rear end 31 of an edge surface 30 of the front edge 21 and the back edge top end 60. The distance (frontage width) between the two edges given by this straight line X is *a*. The distance (depth) in the counter support direction (inward the slot) between the straight line X and the top end 40 of the intermediate block 22 is *b*. The positions of the respective edges are adjusted so that the relation *b* < *a* is established.

The number of intermediate blocks increases with the number of coating layers. In the apparatus according to the present invention, all of the top ends of the intermediate blocks need to satisfy the above relation.

That is, when intermediate blocks 22 and 23 are provided to form slots 27, 28 and 29 as in a coating apparatus 120 shown in Fig. 4, two distances *b*₁ and *b*₂ relative to the straight line X are formed, and then the larger distance *b*₁ is designed to satisfy the above relation.

The test results indicate that if the above relation is satisfied, it is extremely easy to remove strains from the top end portion 40 by wiping off and cleaning the edge, and it is possible to wipe off the edge rapidly without using a special cleansing apparatus or the like. As a result, there is no striped disorder in the boundary between coating layers, and it is also possible to prevent coating stripes from being produced in the surface of the coating layers.

Although stainless steel, high-speed steel or the like may be used as the material of the top end portion of the coating head, sintered hard alloy or ceramic is preferable if finishing with a high accuracy is required.

A well-known technique in accordance with the characteristic of a coating composition is used for a coating composition feed system for feeding a coating composition to the coating apparatus 20. Particularly, in the case of a magnetic coating composition, which generally has cohesiveness, it is preferable to feed such a coating composition while applying enough shear force to the coating composition so as to prevent the coating composition from cohering. Specifically, rotors as described in Japanese Patent Unexamined Publication No. Hei. 1-236968 and U.S. Patent No. 4,828,779 may be used. Without such a rotor disclosed in Japanese Patent Unexamined Publication No. Hei. 1-236968 or the like, it is preferable that the pipe diameter between a pump and a coating head not be more than 50 mm, the pocket diameter of a magnetic liquid coating head is 2 to 20 mm, the slit width of the magnetic coating composition coating head is 0.05 mm to 1 mm, and the length of a slit is 5 mm to 150 mm, but the sizes are not limited to the values mentioned above.

The outline of a main portion of a coating equipment in this embodiment will be described with reference to Fig. 2.

The coating surface of the support 1 is coated with a precoat composition 6 in advance by a conventional coating apparatus 80 such as an engraved-roll coater, a roll coater, a blade coater, an extrusion coater, or the like. This precoat composition 6 prevents entrained air on the support from being involved so as to maintain preferred coating conditions. This precoat composition 6 does not have to be applied by another coating apparatus, and may be applied by a portion provided on the upstream side of one and the same coating apparatus and having a function similar to that of the above-mentioned coater.

A composition mainly composed of an organic solvent used as a solvent of the coating compositions 71 and 72 and which does not form any layer in a product may be used as this precoat composition 6. Alternatively, a composition by which the precoat composition itself forms a layer in a product so as to have a special function, for example, in a magnetic recording medium, may be used as the precoat composition. The above-mentioned coating apparatus 20 is provided between two pass rolls 90 immediately after application of the precoat composition 6 so as to apply the coating compositions 71 and 72 thereto.

Although the coating apparatus 20 is installed between the two pass rolls in the case described above, the coating apparatus 80 may be installed between coating apparatus 20 and the upstream-side pass roll 90. The wrap angle of the support 1 to the coating apparatus 20 may be about 2° to 60°, and the span between the pass rolls 90 may be generally 50 to 3,000 mm, but the angle and the span are not limited to these values.

Examples of the coating compositions 71 and 72 used in the present invention include a photosensitive coating composition, a magnetic coating composition, a surface protective coating composition, an antistatic coating composition, a lubricant coating composition, etc. As for typical products coated with these coating compositions, there are various kinds of photographic films, photographic printing papers, magnetic recording media, etc., as described above.

According to the present invention, the coating surface of the support 1 is coated in advance with a low-concentration composition mainly composed of an organic solvent by means of the conventional apparatus 80 such as an engraved-roll coater, a roll coater, a blade coater, an extrusion coater, or the like. The low-concentration composition applied in advance prevents entrained air from being involved on the upstream side of the front edge when the coating composition is applied to thereby keep preferred coating conditions. In order to keep more stable coating conditions, however, it is preferable to apply the low-concentration composition in an excessive quantity more than that which can pass through a gap between the support and the front edge, and then apply a coating composition while scraping the excessive low-concentration composition by means of the front edge.

The precoat composition 6 mainly composed of an organic solvent in the present invention is a low-concentration composition. The low-concentration composition means an organic solvent alone such as toluene, methyl ethyl ketone, butyl acetate, cyclohexanone or the like, or a combination of these, or a composition in which a binder is dissolved. Preferably, the viscosity thereof is not higher than 20 cp, and more preferably, not higher than 5 cp. A binder used in a coating composition which will be described later is used as the binder.

When magnetic layers are formed from the coating compositions 71 and 72 in a magnetic recording medium according to the present invention, ferromagnetic fine powder is used for the magnetic layers.

Well-known ferromagnetic fine powder such as γ-Fe₂O₃, γ-Fe₂O₃ containing Co, Fe₃O₄, Fe₃O₄ containing Co, γ-FeOₓ, γ-FeOₓ (X=1.33 to 1.50) containing Co, CrO₂, Co-Ni-P alloy, Co-Ni-Fe-B alloy, Fe-Ni-Zn alloy, Ni-Co alloy, Co-Ni-Fe alloy, or the like may be used as the ferromagnetic fine powder. The particle size of such ferromagnetic fine powder is about 0.005 to 1 micron in length, and the ratio of the axial length to the axial width is about 1/1 to 50/1. Further, the specific surface of such ferromagnetic fine powder is about 1 m²/g to 70 m²/g.

Plate hexagonal barium ferrite may be also used as the ferromagnetic fine powder. The particle size of barium ferrite is about 0.001 to 1 micron in diameter, and the thickness is 1/2 to 1/20 as large as the diameter. The specific gravity of barium ferrite is 4 to 6 g/cc, and the specific surface is 1 m²/g to 70 m²/g.

A binder is used together with the ferromagnetic fine powder in magnetic layers. Example of the binder to be used resin, reactant type resin, and a mixture of these.

As for the thermoplastic resin, a softening temperature not higher than 150°C, an average molecular weight of 10,000 to 300,000, and a degree of polymerization of about 50 to 2,000 may be employed. Examples of the thermoplastic resin include polyvinyl chloride-acetate copolymer, polyvinyl chloride-acetate copolymer, vinyl chloride-vinylidene chloride copolymer, vinyl chloride-acrylonitrile copolymer, acrylate-acrylonitrile copolymer, acrylate-vinylidene chloride copolymer, acrylate-styrene copolymer, methacrylate-acrylonitrile copolymer, methacrylate-vinylidene chloride copolymer, methacrylate-styrene copolymer, urethane elastomer, nylon-silicon system resin, nitrocellulose-polyamide resin, polyvinyl fluoride, vinylidene chloride-acrylonitrile copolymer, butadiene-acrylonitrile copolymer, polyamide resin, polyvinyl butyral, cellulose derivative (cellulose acetate butyrate, cellulose diacetate, cellulose triacetate, cellulose propionate, nitrocellulose, etc.), styrene-butadiene copolymer, polyester resin, chlorovinyl ether-acrylate copolymer, amino resin, various kinds of synthetic rubber thermoplastic resins, a mixture of these, etc.

As for the thermosetting resin or the reactant type resin, the molecular weight is not more than 200,000 in the state of a coating composition. When a composition for forming a magnetic layer is applied, dried and thereafter heated, such resin produces reaction products such as condensation, addition, etc., so that the molecular weight can turn infinitely large. In addition, of these resins, there is preferred a resin which is not softened or melted before the resin is thermally decomposed. Specifically, examples of such resin include phenolic resin, epoxy resin, hardening type polyurethane resin, urea resin, melamine resin, alkyd resin, silicon resin, reactant type acrylic resin, epoxy polyamide resin, nitrocellulose melamine resin, a mixture of polymeric polyester resin and an isocyanate prepolymer, a mixture of a methacrylate copolymer and a di-isocyanate prepolymer, a mixture of polyester polyol and polyisocyanate, urea-formaldehyde resin, a mixture of monomeric glycol, polymeric diol and triphenylmethane tri-isocyanate, polyamide resin, a mixture of these, etc.

Those which have been used conventionally are used as ferromagnetic fine powder, solvent, dispersant as additive, lubricant, abrasive, antistatic additive, nonmagnetic support, etc., dispersed in the binder in the same manner as in the conventional case.

For the dispersant, examples include a fatty acid having 12 to 18 carbon atoms (R₁COOH, where R₁ designates an alkyl or alkenyl group having 11 to 17 carbon atoms) such as a caprilic acid, a capric acid, a lauric acid, a myristic acid, a palmitic acid, a stearic acid, an oleic acid, an elaidic acid, a linoleic acid, a linolenic acid, a stearoylic acid, etc.; metallic soap consisting of alkali metal (Li, Na, K, etc.) or alkali-earth metal (Mg, Ca, Ba) of the above-mentioned fatty acid; a chemical compound containing fluorine of the above-mentioned fatty ester; an amide of the above-mentioned fatty acid; polyalkylene oxide alkylphosphate ester; lecithin; trialkyl polyolefine oxy quaternary ammonium salt (the carbon number of alkyl is 1 to 5, the olefine is ethylene, propylene, etc.); etc. Other than these, higher alcohol having 12 or more carbon atoms, sulfate, etc., may be also used.

Although the effect of lubricant may be also recognized in the above-mentioned dispersant, examples of the lubricant may include a silicon oil such as dialkyl polysiloxane (the carbon number of alkyl is 1 to 5), dialkoxy polysiloxane (the carbon number of alkoxy is 1 to 4), monoalkyl monoalkoxy polysiloxane (the carbon number of alkyl is 1 to 5, and the carbon number of alkoxy is 1 to 4), phenyl polysiloxane, phloroalkyl polysiloxane (the carbon number of alkyl is 1 to 5) or the like; an electro-conductive fine powder such as graphite; inorganic fine powder of molybdenum disulfide, tungsten dioxide, or the like; plastic fine powder of polyethylene, polypropylene, polyethylene-vinyl chloride copolymer, polytetrafluorethylene, or the like; α-olefin polymer; unsaturated fatty hydrocarbon which is a liquid at normal temperature (α-olefin in which double bond is bonded with an end carbon, and the carbon atoms of around 20); a fatty ester group and a fluorocarbon group consisting of a monobasic fatty acid of carbon atoms 12 to 20 carbon atoms and monovalent alcohol of 3 to 12 carbon atoms; etc.

Example of the abrasive to be used may include molten alumina, silicon carbide, chromium oxide (Cr₂O₃), corundum, artificial corundum, diamond, artificial diamond, garnet, emery (main components are corundum and magnetite), etc.

Example of the antistatic additive to be used may include conductive fine powder of carbon black, carbon black-grafted polymer, etc.; natural surface active agents such as saponin; nonionic surface active agents such as alkylene oxides, glycerins, glycidols, etc.; cationic surface active agents containing a higher alkylamine group, a quaternary ammonium salt group, a heterocyclic group of pyridine or the like, a phosphonium or sulfonium group; an anionic surface active agents including an acidic group such as a carboxylic group, a sulfon group, a phosphoric acid group, a sulfate group, a phosphate group, etc.; amphoteric active agents such as an amino acid group, an aminosulfonic acid group, a sulfuric or phosphoric ester group of aminoalcohol, etc.

Example of the organic solvent to be used as a coating solvent include ketone series such as acetone, methyl ethyl ketone, methyl isobutyl ketone, cyclohexanone, etc.; ester series such as methyl acetate, ethyl acetate, butyl acetate, ethyl lactate, glycol acetate monoethyl ether, etc.; tar series (aromatic hydrocarbon) such as benzene, toluene, xylene, etc.; chlorinated hydrocarbon such as methylene chloride, ethylene chloride, carbon tetrachloride, chloroform, ethylene chlorohydrin, dichlorobenzene, etc.

The quantity of the solvent is two or three times as much as the magnetic fine powder. Relative to the binder of 100 parts by weight, the dispersant is 0.5 to 20 parts by weight, the lubricant 0.2 to 20 parts by weight, the abrasive 0.5 to 20 parts by weight, the conductive fine powder used as the antistatic additive 0.2 to 20 parts by weight, the surface active agent used as the antistatic additive in the same manner 0.1 to 10 parts by weight.

The magnetic powder, the above-mentioned binder, the dispersant, the lubricant, the abrasive, the antistatic additives, the solvent, etc. are mixed and made into a magnetic coating composition.

Examples of the material of the support 1 include polyesters such as polyethylene terephthalate, polyethylene naphthalate etc., polyolefin such as polypropylene, cellulose derivative such as cellulose triacetate, cellulose diacetate etc., vinyl resin such as polyvinyl chloride, polycarbonate, polyamide resin, film of plastics such as polysulfone, metal materials such as aluminum, copper, etc., ceramics such as glass, etc. These supports may be subjected to a pre-treatment such as a corona discharge treatment, a plasma treatment, a base coating treatment, a heat treatment, a metal evaporation treatment, an alkali treatment, or the like.

As has been described above, in a coating apparatus according to the present invention for a coating composition in the non-pressed state where a back edge is set back from a support while liquid sealing is realized by a front edge, the slot outlet width *a* determined by the distance between the rear end of an edge surface of the front edge and the top end of the back edge is made larger than the distance *b* which is the deepest in the slot depth direction from a straight line expressing the distance of the width *a* to the top end of an intermediate block disposed between the both edges.

Therefore, the top end of the intermediate block can be wiped off and cleaned easily and rapidly without any special cleansing apparatus, so that it is possible to completely remove adhering material which could caused stripes in the boundary portion between coating layers. As a result, it is possible to suppress the occurrence of variations in thickness of coating films in the width direction caused by nonuniformity of the support in the width direction or unstable behavior of the coating composition. Accordingly, coating can be performed so that the thickness of coating is uniform without any stripe faults. Particularly when the coating apparatus according to the present invention is applied to coating of magnetic layers in a magnetic recording medium, it is possible to manufacture a magnetic recording medium having superior electromagnetic transfer characteristics stably at a high speed.

### Examples:

Next, the novel effects of the apparatus according to the present invention will be made clearer by examples of the invention.

Respective components of the compositions shown in Table 1 to 3 were put into a ball mill, mixed and dispersed satisfactorily. These magnetic fluid dispersions were used as coating compositions A to C, respectively.

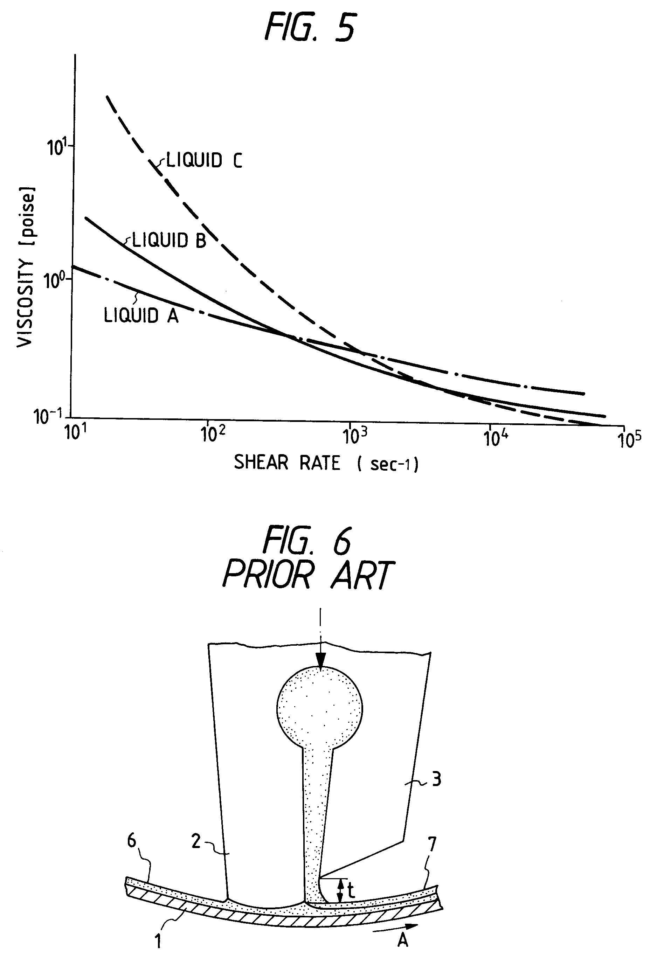

The viscosities of the coating compositions were measured by a Rotovisko viscometer. Thixotropic viscosity characteristics in which the viscosity decreases as the shear rate increases appeared at each shear rate as shown in Fig. 5.

**Table 1**

| (Composition A) | |
|---|---|
| conductive carbon | 100 parts by weight |
| TiO₂ powder | 300 parts by weight |
| vinyl chloride-vinylacetate copolymer | 40 parts by weight |
| methyl ethyl ketone | 700 parts by weight |

**Table 2**

| (Composition B) | |
|---|---|
| γ ferric oxide | 300 parts by weight |
| silicon oil | 5 parts by weight |
| vinyl chloride-vinylacetate copolymer | 30 parts by weight |
| methyl ethyl ketone | 500 parts by weight |
| cyclohexane | 200 parts by weight |

**Table 3**

| (Composition C) | |
|---|---|
| Fe powder | 300 parts by weight |
| conductive carbon | 10 parts by weight |
| vinyl chloride-vinylacetate copolymer | 30 parts by weight |
| cyclohexane | 500 parts by weight |

Methyl ethyl ketone was used as the precoat composition, and applied in an extrusion coating system.

Next, the coating compositions were applied on the basis of the following conditions.

| 1. Support | |
|---|---|
| Material: | polyethylene terephthalate film |
| Thickness: | 10 microns |
| Width: | 500 mm |
| 2. Coating speed: | 800 m/min |

### Example 1

The production state of striped coating in the coating layer surface was investigated as the respective sizes *a* and *b* were changed in the coating apparatus 20 having a head shape shown in Fig. 3. Table 4 shows the result. As for the coating thickness, the precoat composition was 3 cc/m², a lower layer (liquid A) was 20 cc/m², and an upper layer (liquid C) 2 cc/m².

In all cases, coating was started after the top end portion of the coating head was wiped off with gauze moistened with methyl ethyl ketone.

### Example 2

The production state of striped coating was investigated as the respective sizes *a*, *b*₁ and *b*₂ were changed in the coating apparatus 120 having a head shape shown in Fig. 4. Table 5 shows the result. As for the coating thickness, the precoat composition was 2 cc/m², a lower layer (liquid A) 10 cc/m², an intermediate layer (liquid B) 5 cc/m², and an upper layer (liquid C) 4 cc/m².

In either case, coating was started after the top end portion of the coating head was wiped off with gauze moistened with methyl ethyl ketone.

**Table 4**

| a[µm] | b[µm] | Number of Stripes |
|---|---|---|
| 300 | 280 | A |
| 300 | 290 | A |
| 300 | 300 | B |
| 300 | 310 | C |
| 700 | 680 | A |
| 700 | 690 | A |
| 700 | 700 | B |
| 700 | 710 | C |
| 1000 | 980 | A |
| 1000 | 990 | A |
| 1000 | 1000 | B |
| 1000 | 1000 | C |
| A: Number of stripes was 0 to 2 / 10,000 m² B: Number of stripes was 2 to 10 / 10,000 m² C: Number of stripes was 10 or more / 10,000 m² | | |

**Table 5**

| a[µm] | b1[µm] | b2[µm] | Number of Stripes |
|---|---|---|---|
| 900 | 700 | 890 | A |
| 900 | 700 | 900 | B |
| 900 | 700 | 910 | C |
| 900 | 890 | 800 | A |
| 900 | 900 | 800 | B |
| 900 | 910 | 800 | C |
| 1500 | 1400 | 1490 | A |
| 1500 | 1400 | 1500 | B |
| 1500 | 1400 | 1510 | C |
| 1500 | 1490 | 1450 | A |
| 1500 | 1500 | 1450 | B |
| 1500 | 1510 | 1450 | C |
| A: Number of stripes was 0 to 3 / 10,000 m² B: Number of stripes was 3 to 15 / 10,000 m² C: Number of stripes was 15 or more / 10,000 m² | | | |

In the Tables, the number of stripes produced is expressed by number per unit coating area (10,000 m²). The evaluation A designates superior in practical use, B designates usable in practical use, and C designates unusable in practical use.

As is apparent from this result, a superior result can be obtained if the relation *a* > *b* is satisfied.

## Claims

1. A coating apparatus in which a precoat composition is applied in advance onto a coating surface of a support, and in a liquid-sealed condition in which entrained air is eliminated between said precoat composition and a front edge on an upstream side in the moving direction of said support, at least two layers of coating compositions are discharged from an extrusion head comprising the front edge, a back edge located on the downstream side in the moving direction of said support and at least one intermediate block disposed between said two edges, in which the back edge has a top end set back from said front edge in the direction against said support, said coating apparatus being characterized in that a relationship *a* > *b* is established between a slot outlet width *a* determined by a distance between an edge surface rear end of said front edge and a top end of said back edge, and a distance *b* in the direction of a slot depth from a straight line X expressing said first-mentioned distance to a top end of the deepest intermediate block.

2. The coating apparatus of claim 1, wherein said extrusion head has two intermediate blocks.

3. The coating apparatus of claim 1, wherein said front edge has an edge surface opposite to said support expanding toward the support with a radius of curvature of about 0.5 mm to about 20 mm.
